Europäisches Patentamt

European Patent Office

Office européen des brevets

(11) Publication number: **0 113 883**
**A2**

# EUROPEAN PATENT APPLICATION

(21) Application number: **83112567.9**

(51) Int. Cl.³: **B 23 P 19/04**

(22) Date of filing: **14.12.83**

(30) Priority: **22.12.82 US 452243**

(43) Date of publication of application: **25.07.84**
**Bulletin 84/30**

(84) Designated Contracting States: **DE FR GB IT NL SE**

(71) Applicant: **GENERAL ELECTRIC COMPANY, 1 River Road, Schenectady New York 12305 (US)**

(72) Inventor: **Smashey, Russell Wayne, 6202 North Shadow Hill Way, Loveland Ohio 45140 (US)**
Inventor: **Stoffer, Lewis John, 7355 Thompson Road, Cincinnati Ohio 45247 (US)**

(74) Representative: **Schüler, Horst, Dr. European Patent Attorney et al, Kaiserstrasse 41, D-6000 Frankfurt/Main 1 (DE)**

(54) Article with a fluid passage and method for making.

(57) A fluid-cooled member, one form of which is a turbomachinery blading member, is provided by a method which first disposes a sacrificial material on a surface or in a surface of a first member. A cover material is applied over the sacrificial material and over at least that portion of the surface of the first member adjacent the sacrificial material, after which the sacrificial material is removed to provide at least a portion of the fluid passage. One form of the invention provides for stacked passages within the member.

10259-13DV-8183

ARTICLE WITH A FLUID PASSAGE AND METHOD FOR MAKING

CROSS REFERENCE TO RELATED APPLICATIONS

This application relates to copending U. S. Patent application Serial No. 292,857 filed August 14, 1981 entitled "Plasma Spray-Cast Components", and to copending and concurrently filed European Application ............ (U.S. Patent Application Serial No. 452,242) entitled "Method for Producing an Article with a Fluid Passage". The disclosures of both said copending applications are hereby incorporated herein by reference.

BACKGROUND OF THE INVENTION

This invention relates to articles such as turbomachinery articles which include a fluid passage such as for cooling, and, more particularly, to a method for making such articles and to turbomachinery blading members.

Gas turbine engine components such as blades, vanes, combustors, and rotating disks, as well as a variety of other members exposed to elevated temperatures, have relied upon fluid-cooling, generally air. Such cooling facilitates component operation at high temperatures, in excess of those at which the component's material of construction can operate effectively without such cooling. However, inclusion of cooling passages within such structures has resulted in designs increasing in complexity. Typical of such air-cooled turbine blades and vanes are those shown in U. S. Patents 3,628,880-Smuland et al and 3,628,385-Sidenstick et al, the disclosures of which are incorporated herein by reference. As shown by these and other publications, current air-cooling of blades and vanes is accomplished by a complex internal cooling passage, generally with holes through an outer wall connecting the internal passage with the blade or vane outer surface such as for film cooling.

Such complex structures are difficult to manufacture. Accordingly, the operating temperature capability of certain turbomachinery is limited from a practical viewpoint, not so much by material or design concept restrictions, but rather by the practical capability to fabricate such complex fluid-cooled components. For example, current air-cooled turbine blades used in modern gas turbine engines include very complex internal cooling passages and sometimes include inserts or impingement baffles to assist in directing the internal flow of cooling air. Such turbine blades currently are manufactured predominantly by precision casting techniques involving the use of removable casting cores which are complex in shape, difficult to manufacture accurately, difficult to handle and difficult to maintain in position during the casting process. Because of the high temperatures and sometimes relatively long holding times involved in such a casting operation, the casting cores, generally ceramic, have been known to shift or sag or both. Such mispositioning of casting cores can result in articles which are unacceptable for use in gas turbine engines and impractical to repair.

## SUMMARY OF THE INVENTION

It is a principal object of the present invention to provide an improved and practical method for producing a fluid passage in an article without the use of conventional casting cores.



0113883

13DV-8183

- 3 -

Another object is to provide a method for producing a fluid passage in an article through the use of a sacrificial material entrapped between abutting materials or within a member and later removed to provide the fluid passage.

A further object to define a method for providing an article with an improved cooling structure within a wall, generally an outer wall, of the article.

Still another object is to provide a fluid-cooled turbomachinery blading member, such as a blade or vane, having an airfoil the outer wall of which includes improved cooling through a fluid passage spaced from and between inner and outer surfaces of the outer wall.

These and other objects and advantages will be more fully understood from the following detailed description, the drawing and the examples, all of which are intended to be representative of rather than in any way limiting on the scope of the present invention.

Briefly, the present invention in one form provides a fluid-cooled turbomachinery blading member, such as a blade or vane, having improved cooling within a wall of the member and which comprises an airfoil having an outer wall comprising inner and outer surfaces, and a fluid passage spaced from and between the inner and outer surfaces. In another form, the outer wall is disposed substantially about a fluid-cooled interior. In other forms, the outer wall includes a plurality of stacked fluid passages. Still other forms include a fluid-cooled blade or vane platform or shroud or both, connected with a fluid-cooled interior.

One form of the method of the present invention includes the steps of providing a first member having a surface on which, or within a groove in which, is deposited a sacrificial material. Thereafter, a cover material is applied over the sacrificial material and over at least that portion of the surface of the first member adjacent the sacrificial material. Removal of the sacrificial material provides at least a portion of the fluid passage.

For the provision of complex articles including complex fluid passages, one preferred form of the method of the present invention uses low pressure plasma deposition, one form of which is called Plasma Spray Casting, for provision of the first member or the cover material or both, generally through the use of a removable mandrel which assists in definition of the desired shapes. Other forms of the method include the production of a fluid passage system having a plurality of stacked fluid passages by repeating a method through which a first of the passages is produced.

### BRIEF DESCRIPTION OF THE DRAWING

Figures 1, 2, 3 and 4 are fragmentary, sectional views of one sequence of steps in one form of the present invention;

Figures 5, 6, 7 and 8 are fragmentary, sectional views of another sequence of steps in another form of the present invention;

Figures 9, 10 and 11 are fragmentary, sectional views of still another sequence of steps in a further form of the present invention;

Figures 12 and 13 are fragmentary, sectional views of the provision of a plurality of stacked passages according to this invention;

Figure 14 is a partially sectional, perspective view of a turbine blade which includes a plurality of stacked passages according to this invention;

Figure 15 is a cross-sectional view taken along lines 15-15 of Figure 14;

Figures 16 and 17 are fragmentary, sectional views of variable cross-section area passages within an article.

## DESCRIPTION OF THE PREFERRED EMBODIMENTS

For many years, it has been recognized in the gas turbine engine art that the mechanical property capabilities of alloys such as the superalloys based on elements such as nickel, cobalt, iron and their combinations can be enhanced or their operating temperatures increased through the use of air-cooling. Such cooling generally has been accomplished with air passages within articles, with the passages usually communicating with the outer surface of the article for film cooling.

One form of the present invention provides an improved outer wall cooling arrangement by including cooling passages within, rather than solely holes or slots perforating, the outer wall.

Generally, such complex articles as turbine blades and vanes have been provided through use of casting cores in the "lost wax" precision casting technique or through the various material removal processes such as electrolytic, electrodischarge, electrochemical, laser, mechanical drilling, or various combinations of such techniques. A typical air-cooled blade or vane includes a labyrinth type passage within the blade interior, generally in combination with holes or other openings through the outer wall or blade tip, to create film cooling type operation around the outer surface of the article. It can be appreciated that manufacture of such an article is difficult and costly.

A process for the fabrication of free-standing parts was reported in February, 1964, in Metals Engineering Quarterly in an article by Mash & Brown entitled "Structure and Properties of Plasma-Cast Materials." Such a technique involved spraying molten particles onto a mandrel of suitable geometry and, subsequently, removing the mandrel by some convenient means. One procedure for accomplishing such deposition is described in detail in U. S. Patent 3,839,618-Muehlberger issued October 1, 1974, the disclosure of which is incorporated herein by reference. Such a method is conducted in a low pressure chamber and sometimes is called one form of low pressure plasma deposition.

Such a method has the capability to fabricate complex shapes from difficult-to-handle materials, such as nickel-base or cobalt-base superalloys, and to produce multiple layered structures of the same or different materials. Therefore, the low pressure plasma deposition method, an improved form of which is described in cross referenced and incorporated application Serial No. 292,857, is preferred in the practice of the method of the present invention. However, as will be recognized by those skilled in the art, other methods for generating or depositing various portions of the structures involved with the present invention may be provided by a variety of known means, providing a first or base member on which is deposited a sacrificial material over which is applied a cover material to entrap the sacrificial material. For example, the first member can be a forging or a casting or other preformed shape and the cover material can be applied by pressure forming, casting, electrodeposition, etc.

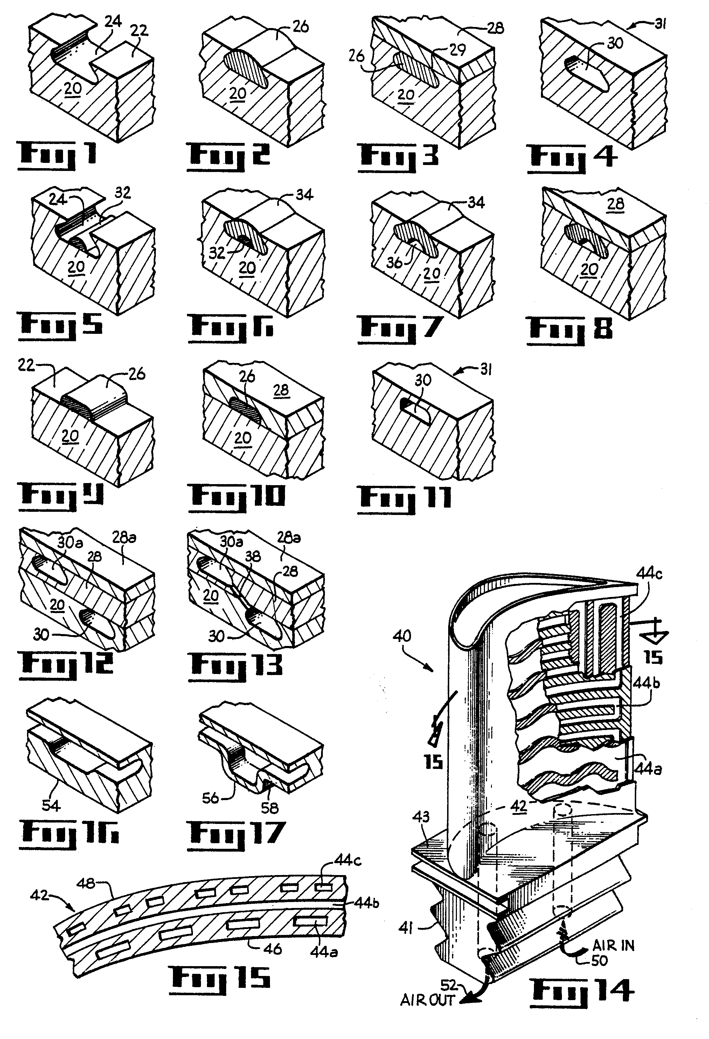

With reference to the drawing, Figures 1, 2, 3 and 4 are diagrammatic, fragmentary, sectional views of a series of steps in one form of the method of the present invention. A first member 20 is provided, for example, as a forging, casting, sheet member, compacted powder, plasma cast member, etc. First member 20 can be the outer wall of an airfoil of a turbomachinery blading member, or of a combustor member, generated by the low pressure plasma deposition or plasma spray casting of metallic material onto a removable mandrel. An improved form of such a process is described more particularly in the above-identified and incorporated, cross referenced, copending application Serial No. 292,857.

With reference to Figure 1, one form of the present invention includes generating in a surface 22 of first member 20 a groove 24 of a selected configuration of at least a portion of a fluid passage desired to be generated in first member 20. Such groove can be generated by a variety of means, some of which can be programmed or automated. For example, it can be provided by selective chemical etching or chemical milling using appropriately placed stop-off materials, by the process of photoetching, by precision casting the groove during the manufacture of member 20, by electrochemical or electrodischarge machining, by mechanical cutting or milling, by laser, by electron beam, or by other material removal processes which are capable of generating an appropriately configured indentation in surface 22 of first member 20, alone or in various combinations. A preferred method for generating complex shaped grooves or groove patterns is the process of photoetching, well known and used in industry. For example, manufacture of certain electrical printed circuit boards uses photoetching. In such a process, as it relates to the present invention, a metal surface is coated with a photosensitive emulsion which is resistant to etchant chemicals. Then portions of such surface are selectively exposed to light, for example by projecting an image of the groove or groove pattern onto the surface. The emulsion is developed to provide areas with and without emulsion, depending on the projected pattern. When the surface is subjected to an appropriate chemical etchant solution, those areas without emulsion are chemically dissolved to provide the groove or groove pattern to a selected depth.

With reference to Figure 2, after generation of groove or indentation 24, a sacrificial material 26 is deposited or positioned in groove 24. Such sacrificial material can be of a variety of materials which can be removed, without irreversible damage to member 20, from groove 24 such as by melting, flushing, chemical removal or etching, preferential diffusion into one or more surrounding materials, such as member 20, etc. One form of material which has such a capability is a metal such as nickel or an alloy of nickel, particularly in cooperation with the first member in the form of a nickel-base superalloy. The nickel can be deposited by such means as electro or electroless plating, spray deposition, vapor deposition, pressing, etc., using appropriate stop-off materials, if required.

A cover material, such as first cover material 28 in Figure 3, is then applied over the sacrificial material and over at least that portion of the surface of first member 20 adjacent the sacrificial material to entrap sacrificial material 26 between cover material 28 and first member 20. It can be applied over member 20 and sacrificial material 26 by a variety of means, for example electro or electroless deposition, pressure or diffusion bonding, or casting. However, according to a preferred form of the method of the present invention, such cover material 28 is applied by low pressure plasma deposition or plasma spray casting.

Thereafter, sacrificial material 26 is removed providing, as shown in Figure 4, at least a portion of fluid passage 30 in an article shown generally at 31.

It has been recognized that a significantly improved high temperature operating, fluid-cooled article, for example an air-cooled blading member or combustor, can be provided according to the present invention. This is accomplished through use of a cover material as an outer structural portion of the article, as contrasted with an outer coating, when the cover material is particularly characterized by resistance to high temperature operating conditions: thermal fatigue resistance, environmental resistance such as resistance to oxidation or hot corrosion, or both. The temperature range of about 1400-2500°F (about 760-1370°C), and particularly about 1500-2200°F (about 815-1200°C), is the high temperature range of current interest. One form of the present invention includes use or disposition of such a cover material as an outer structural portion of an outer wall of a fluid-cooled article, the cover material being an alloy characterized by greater resistance to high temperature operating conditions than is the alloy of the inner portion of the article.

Another form of the method of the present invention for facilitating removal of sacrificial material 26, as by chemical reaction means, is represented in Figures 5, 6, 7 and 8. In such embodiment, after generation of the groove as shown in Figure 1, a first sacrificial material 32, for example a low melting alloy, is deposited in a portion of the groove 24, as shown in Figure 5. Then a second sacrificial material 34 is deposited in the groove and over first sacrificial material 32, as described above and as shown in Figure 6. First sacrificial material 32 is removed, such as by melting, leaving an opening or channel 36 in sacrificial material 34, as shown in Figure 7, through which a chemical solution, such as an acid etchant, later can be passed. Such an arrangement facilitates later removal of second sacrificial material 34. Cover material 28 in Figure 8 is applied, as is described in connection with Figure 3, and sacrificial material 34 is removed to provide fluid passage 30 in article 31, shown in Figure 4.

The relative thicknesses of first member 20 and cover material 28 can be adjusted, as desired, depending upon the design of the article being manufactured. Also, the materials of first member 20 and of cover material 28, generally metals or alloys, can be the same or different, and can be selected from a variety of materials. Although the components of article 31 can be of the same material or alloy, the drawings show, for the purpose of illustration of the scope of the present invention, the cover material as a separate material from first member 20. In general, later heat treatment according to known methods can bond, as by diffusion, any such separation between members. However, if the low pressure plasma spray technique is used, a metallurgical bond between such members is generated during that process. Further enhancement of the bond region can be achieved by heat treatment. Preferably, first member 20 and cover material 28 are blended or bonded together substantially into a single metallurgical structure through which fluid passage 30 passes. Additional operations can be performed on such a structure, including hot isostatic pressing, coining, shaping and other forming and finishing operations. When hot isostatic pressing is used, closure or collapse of fluid passage 30 is avoided, such as by opening the passage to the pressurizing medium.

In another embodiment of the present invention, shown in the sequence of Figures 9, 10 and 11, fluid passage 30 can be produced by depositing sacrificial material 26 on, rather than within, surface 22 of member 20. Thereafter, cover material 28 is applied over the sacrificial material and over at least that portion of the surface of the first member adjacent the sacrificial material. When sacrificial material 26 is thereafter removed, fluid passage 30 is provided in article 31 as described above.

It is possible that a fluid passage such as 30 in Figures 4 or 11 may include a condition, such as a corner or edge, which may be a potential detrimentally stressed area for a particular application. Such a condition can result from the juncture, such as 29 in Figure 3, of cover material 28, sacrificial material 26, and first member 20. One form of the method of the present invention includes refining the shape of a fluid passage to eliminate such condition by circulation of a chemical material removal solution, such as a chemical etchant or chemical milling solution, through the passage after removal of the sacrificial materials.

A plurality of stacked fluid passages, such as is shown in Figure 12, can be provided by repeating the above-described sequences of steps, using the surface of first and, if desired, subsequently applied cover materials as a first member surface in which a groove was generated to receive sacrificial material or on which was deposited an additional sacrificial material. In this way, additional passages 30a enclosed by an additional cover material 28a can be provided. By providing communication between stacked sacrificial materials, such as periodic or preselected, localized channels from stacked grooves toward one another, interconnected fluid passages can be provided. Such an arrangement is shown in Figure 13 with interconnection 38 between channel 30 and channel 30a.

Practice of the above-described forms of the method of the present invention can provide a turbomachinery blading member which comprises an airfoil having an outer wall portion which includes inner and outer surfaces and a fluid passage spaced from and between the inner and outer surfaces. One form of such a blading member is shown in Figure 14 as a turbine blade having an airfoil shown generally at 40, a base 41 and a platform 43 therebetween. The airfoil includes an outer wall portion 42 within which wall are a plurality of stacked fluid passages 44a, 44b and 44c, spaced from and between outer surface 46 and inner surface 48 of outer wall portion 42, as shown in Figure 15, a fragmentary section of outer wall 42 taken along lines 15-15 of Figure 14. Fluid passages 44a, 44b and 44c are intended to represent one or a plurality of fluid passages, the plurality being disposed in a stacked relationship in wall 42 in a direction between inner surface 48 and outer surface 46, as shown in Figure 15. Such passages are substantially distinct from one another in that direction: communication between such fluid passages can be provided for at appropriate points to enable continuous or alternate flow through the wall portion 42. Air can be directed within the blade through air inlet 50 in the base of the blade to exit from port 52 also shown in the base of the blade in Figure 14. Intercommunication between the fluid passages can be provided such as is represented in Figure 13. A variety of individual or interconnected passages, or their combinations, can be provided to enable fluid flow within an article in the event of a flow interruption or reduction such as a blockage of a passage or a break in a wall.

In one evaluation, it was found that for a fixed turbine blade design and material, use of the present invention in the form of a single serpentine air-cooling passage of the type shown as 44c in Figure 14 required significantly lower cooling air flow to maintain a given cooling efficiency.

According to the method of the present invention, fluid passages of nonuniform, cross-sectional shape or area can be provided by particularly shaping or varying the shape of a groove such as 24 in Figure 1. The fragmentary, diagrammatic, sectional views of Figures 16 and 17 represent such variation in passage shape, for example, to bring additional fluid closer to a surface such as 54 in Figure 16 or 56 in Figure 17 which might be subject to temperatures higher than other portions of the article. In Figure 17, protuberance 58, as it relates to turbomachinery blading members, can represent a blade platform, a vane end shroud, an airfoil midspan shroud or platform, etc.

In one example of the practice of the method of the present invention, a first member in the form of a sheet of the commercially available nickel-base superalloy INCO-718 was prepared with stop-off material for the chemical milling or chemical etching of an air-cooling pattern represented by groove 24 in Figure 1. As is well known in the art, chemical milling of selected portions of alloy surfaces can be conducted through the use of appropriately positioned stop-off materials which inhibit reaction between the chemical etchant and the material of first member, in this case INCO-718 alloy. In this way, an air-cooling pattern was chemically milled into a surface of the INCO-718 member using a solution which was a mixture of nitric and hydrofluoric acids along with an iron chloride. In this particular example, the groove was chemically milled to a depth of about 0.015 inch although other evaluations prepared grooves which ranged in thickness between about 0.001-0.02 inch.

After generation of the groove pattern by chemical milling, the groove was filled with electroplated nickel, as a sacrificial material, in a conventional manner well known and commercially used in the art. The stop-off material was removed and a cover of the commercially available nickel-base superalloy Hastelloy X alloy was deposited by low pressure plasma deposition, of the type described in the cross-referenced and incorporated application Serial No. 292,857, over the electroplated nickel and over the surface of the INCO-718 alloy first member adjacent the electroplated nickel sacrificial material. The nickel electroplate then was removed using an aqueous chemical etching solution of about 50 volume percent nitric acid applied to the nickel electroplate at exposed ends of the groove. The result was a groove pattern within the article of the metallurgically bonded members of INCO-718 and Hastelloy X alloys. As was mentioned, the groove cross section in this example was about 0.015 inch with the total thickness of the wall provided from the INCO-718 alloy and Hastelloy X alloy having a cross-sectional thickness of about 0.21 inch.

In order to evaluate the flow pattern within such wall, the member was heated to about 50° C during which Freon gas was passed through the groove air-track as thermographic images were recorded. This evaluation showed there was a continuous flow through the air-track groove within the member.

- 15 -

Although the present invention has been described in connection with specific embodiments and examples, it will be understood by those skilled by the art that the invention is capable of variations and modifications within the scope of the appended claims.

CLAIMS

What is claimed is:

1. In a method for producing a fluid passage in an article, the steps of:

a) providing a first member;

b) generating in a surface of the first member a first groove of a selected configuration of at least a portion of the fluid passage;

c) depositing a sacrificial material in the groove;

d) applying a first cover material over the sacrificial material and over at least that portion of the surface of the first member adjacent the sacrificial material; and then,

e) removing the sacrificial material to provide at least a portion of the fluid passage.

2. The method of claim 1 in which the groove is generated in the surface of the first member by photoetching.

3. The method of claim 1 in which the cover material is applied by low pressure plasma deposition.

4. The method of claim 1 in which the first cover material is an outer structural portion of the article and is characterized by greater resistance to high temperature operating conditions than is the first member.

5. The method of claim 1 in which a chemical material removal solution is circulated through the fluid passage to refine the fluid passage.

6. The method of claim 1 in which the first member is provided by:

i) providing a mandrel; and then,

ii) applying a first material to a surface of the mandrel;

iii) the mandrel being removed in production of the article.

7. The method of claim 1 for producing in an article a fluid passage system having a plurality of stacked fluid passages, in which method, after applying the first cover material, the steps of:

generating in the first cover material a second groove of selected configuration of at least a portion of the fluid passage system;

depositing a sacrificial material in the second groove; and then,

applying a second cover material over the sacrificial material and over at least that portion of the surface of the first cover material adjacent the sacrificial material in the second groove.

8. In the method of claim 7 in which additional stacked fluid passages are provided by repeating the method of claim 7.

9. The method of claim 7 in which sacrificial material in stacked grooves are in communication to define an interconnected passage configuration through the fluid passage system.

10. In a method for producing a fluid passage in an article, the steps of:

a)    providing a first member;

b)    depositing on a surface of the first member a sacrificial material in a selected configuration of at least a portion of the fluid passage;

c)    applying a first cover material over the sacrificial material and over at least that portion of the surface of the first member adjacent the sacrificial material; and then

d)    removing the sacrificial material to provide at least a portion of the fluid passage.

11. The method of claim 10 in which the cover material is applied by low pressure plasma deposition.

12. The method of claim 10 in which the first cover material is an outer structural portion of the article and is characterized by greater resistance to high temperature operating conditions than is the first member.

13. The method of claim 10 in which a chemical material removal solution is circulated through the fluid passage to refine the fluid passage.

14. The method of claim 10 in which the first member is provided by:

    i)   providing a mandrel; and then,

    ii)  applying a first material to a surface of the mandrel;

    iii) the mandrel being removed in production of the article.

15. The method of claim 10 for producing in an article a fluid passage system having a plurality of stacked fluid passages, in which method, after applying the first cover material, the steps of:

    depositing on the first cover material a sacrificial material in a selected configuration of at least a portion of the fluid passage system; and then

    applying a second cover material over the sacrificial material and over at least that portion of the surface of the first cover material adjacent the sacrificial material on the first cover material.

16. In the method of claim 15 in which additional stacked fluid passages are provided by repeating the method of claim 15.

17. The method of claim 10 in which sacrificial material on stacked cover materials are in communication to define an interconnected passage configuration through the fluid passage system.

18. A fluid-cooled turbomachinery blading member comprising:

an airfoil having an outer wall which includes an inner surface and an outer surface, and

a fluid passage spaced from and between the inner and outer surfaces.

19. The blading member of claim 18 in which:

the outer wall comprises an inner portion of a first alloy and an outer structural portion of a second alloy, the outer portion including the outer surface;

the second alloy being characterized by greater resistance to high temperature operating conditions than the first alloy.

20. The blading member of claim 18 in which:

the airfoil has a fluid-cooled interior, and the outer wall is disposed substantially about the fluid-cooled interior.

21. The blading member of claim 18 in which the airfoil outer wall includes a plurality of fluid passages disposed in a stacked relationship in a direction between the inner surface and the outer surface, the passages being substantially distinct from one another in said direction.

22. The blading member of claim 21 in which the fluid passages are in communication at preselected areas to provide an interconnected passage through at least a portion of the member in said direction.

23. A fluid-cooled turbomachinery blading member comprising:

an airfoil, a base and a platform therebetween,

the member having a fluid-cooled interior, and

0113883

13DV-8183

- 5 -

a fluid passage within the platform and having a fluid passage inlet connected with the fluid-cooled interior.

24. The blading member of claim 23 in which the fluid passage within the platform communicates solely with the fluid-cooled interior of the blading member.

25. A fluid-cooled turbomachinery blading member comprising:

an airfoil including a shroud projecting therefrom,

the member having a fluid-cooled interior, and

a fluid passage within the shroud and including a fluid passage inlet connected with the fluid-cooled interior.

26. The blading member of claim 25 in which the fluid passage within the shroud communicates solely with the fluid-cooled interior of the blading member.

LHS/jt
12/9/82

0113883

10259-13DV-8183

Fig 1

Fig 2

Fig 3

Fig 4

Fig 5

Fig 6

Fig 7

Fig 8

Fig 9

Fig 10

Fig 11

Fig 12

Fig 13

Fig 16

Fig 17

Fig 15

Fig 14